# EUROPÄISCHE PATENTANMELDUNG

(11) **EP 1 180 613 A2**
(43) Veröffentlichungstag der Anmeldung: **20.02.2002**
(21) Anmeldenummer: 01108097.5
(22) Anmeldetag: 30.03.2001
(51) Int. Cl.: F16D 66/00

(54) **Vollscheibenbremse mit Kühlmittel für Strassenfahrzeuge**

(30) Priorität: 08.08.2000 DE 10038490
(71) Anmelder: WABCO GmbH & CO. OHG, 30432 Hannover (DE)
(72) Erfinder: Feldmann, Joachim, 31535 Neustadt (DE); Bodet, Marc, 30989 Northen (DE); Antony, Paul, 67550 Worms (DE)
(74) Vertreter: Schrödter, Manfred

(57) **Zusammenfassung**

Eine als abzubremsende Scheibe dienende Rotorscheibe aus einem metallischen Werkstoff ist drehfest mit einem Fahrzeug-Rad verbunden; zu beiden Seiten der Rotorscheibe sind zwei in Drehrichtung gesicherte aber axial verschiebliche Reibscheiben z. B. aus Keramik angeordnet. An der Rotorscheibe sind zu beiden Seiten in einem kreisringförmigen Bereich als separate mechanische Baueinheiten ausgeführte Bremsbelag-Segmente aufgeklebt. Durch Betätigung einer Zuspanneinrichtung ist eine reibschlüssige Verbindung zwischen der Rotorscheibe und den Reibscheiben hergestellt.

Zwischen der Rotorscheibe und den jeweils der Rotorscheibe zugewandten Seite der Reibscheiben sind Kühlmittel in Form von zwischen den Bremsbelag-Segmenten angeordneten Luftführungskanälen vorgesehen, die sich von radialen Ausnehmungen in der Rotorscheibe bis zu den Reibscheiben erstrecken, so daß die Kühlluft die Reibungswärme direkt am Ort ihrer Entstehung abbaut.

Einerseits bleibt so die Aufheizung der Bremsbelag-Segmente sehr begrenzt und andererseits wirken die Bremsbelag-Segmente auch als wärmeisolierende Elemente zwischen den Reibscheiben und der Rotorscheibe, so daß sich die Rotorscheibe selbst nur in sehr geringem Maße erwärmt.

## Beschreibung

Die Erfindung betrifft eine Vollscheibenbremse entsprechend dem Oberbegriff des Patentanspruchs 1.

Eine derartige Vollscheibenbremse ist aus der US-FS-3,830,345 bekannt.

Bei der bekannten Schrift sind zwei Gehäuseeinheiten [dort housing sections (20), (24)] vorgesehen, in denen zwei gleichartige Bremsschuh-Zuspanneinrichtungen untergebracht sind, welche zur gleichförmigen Kraftausübung an gegenüberliegenden Seiten einer Bremsscheibe [dort (36)] angeordnet sind.

Die Bremsscheibe ist mit der Radnabe [dort (12)] eines Fahrzeugrades verbunden. Auf den beiden Seiten der Bremsscheibe sind Bremsbelag-Elemente [dort two lining elements (42)] montiert; entsprechend der Bremsscheibenform sind die Elemente ringförmig angeordnet.

Die Zuspannung erfolgt über ein Paar von gegen die Bremsscheibe beweglichen Bremsschuhen [dort brake shoes (46)], die auf beiden Seiten der Bremsscheibe angeordnet sind. Hierzu werden die Bremsschuhe über Fluid-betätigte Schläuche [dort (64)] durch ein Paar von ringförmig konfigurierten, beweglichen Kolben [dort (60)] mit Kraft beaufschlagt, um den Reibschluß mit der Bremsscheibe herzustellen.

An den der Bremsscheibe abgewandten Oberflächen der Bremsschuhe sind Kühlrippen [dort (80)] als erste Kühlmittel zur Kühlung durch die Umgebungsluft vorgesehen.

Als Kühlmittel zweiter Art sind Kühlrippen [dort rib portions (82)] im freiliegenden Bereich eines Bremsschuhes vorgesehen.

Die Bremsbelag-Elemente sind aus metallischem oder gut wärmeleitendem Material ausgeführt, so daß die Reibungswärme gut zu den Bremsschuhen übertragen wird.

Die Scheibenbremse nach der WO 98/55776 A1 zeigt eine mit einem zu bremsenden Rad drehfest verbundene Rotorscheibe [dort disque rotor (20)] und zwei verdrehfest gegenüber der Fahrzeugachse angeordnete Statorscheiben [dort disques stator (30, 40)], welche axial frei beweglich sind. Die jeweils den Statorscheiben sich zuwendenden Flächen der Rotorscheibe und die sich der Rotorscheibe zuwendenden Flächen der Statorscheiben bilden Reibungsflächen. Durch Krafteinwirkung der Statorscheiben auf die Rotorscheibe wird diese zur Erzeugung einer Bremswirkung eingeklemmt, wobei die Axialkraft von einer Anlagevorrichtung [dort plaque d'appui (80)] aufgenommen wird. Die als koaxiale Ringe ausgeführten Stator- und Rotorscheiben bestehen aus aus einem Thermostruktur-Werkstoff, wobei mindestens im Bereich der Reibungsflächen koaxiale ringförmige Reibungsbeläge aus einem anderen Thermostruktur-Werkstoff als im Kern der Scheiben vorgesehen sind. Zu ihrer Verdrehsicherung sind an einer Statorscheibe an der der Rotorscheibe abgewandten Seite Verdrehsicherungselemente [dort logements radiaux (36)] vorgesehen, die mit Komplementärelementen [dort clavettes (64)] auf Anlagevorrichtungen zusammenwirken. Diese Drehsicherungselemente sind so ausgeführt, daß an den der Rotorscheibe abgewandten Begrenzungsflächen Luftkammern [dort lame d'air (66)] entstehen, die zur Ventilation der Bremse beitragen. Im Innern der Rotorscheibe sind Kühlmittel in Form von Luftkanälen in unterschiedlicher Ausführungsform [dort z. B. nach Fig. 14] vorgesehen. Bei dieser Schrift muß zur Kühlung die Reibungswärme vom Ort ihrer Entstehung entweder zu den Luftkanälen in der Rotorscheibe oder durch die Statorscheiben zur Konvektionskühlung geleitet werden; die Kühlung erfolgt also indirekt und unter starker Erwärmung der vom Wärmefluß durchströmten Bauteile. Bei der Schrift ist außerdem nachteilig, daß sich, vorwiegend bei starker Abbremsung, durch die elastische Verformung der Anlagevorrichtung [dort (50)] eine ungleichmäßige Flächenpressung einstellt, wobei diese zum Innendurchmesser stark abnimmt. Als Folge davon stellt sich am Außendurchmesser eine erhöhte Leistungsverdichtung mit entsprechend überproportionalem Verschleiß ein.

Aus der US-PS-5,205,380 ist eine Vollscheibenbremse bekannt, welche sowohl als Betriebs- wie als Feststellbremse, oder als Kombination von Betriebs- und Feststellbremse ausgestattet sein kann. Die Bremsscheibe der Vollscheibenbremse verfügt über eine Innenverzahnung und ist darüber in Umfangsrichtung formschlüssig, aber in Axialrichtung verschieblich mit einer Vielkeilwelle verbunden, welche ihrerseits formschlüssig mit dem zu bremsenden Rad [dort (12)] verbunden ist. Das Rad ist über Kugellager [dort (14)] mit der feststehenden Achse [dort (10)] des Fahrzeugs drehbar verbunden. Die Zuspanneinrichtung der Vollscheibenbremse ist formschlüssig mit der Achse verbunden; bei einer Bremsbetätigung bewirkt die Zuspanneinrichtung, daß ringförmige Bremsbeläge [dort (76), (38)] auf jeweils gegenüberliegenden Seiten der Bremsscheibe mit einer der Bremsbetätigung entsprechenden Normalkraft gegen diese gedrückt werden, so daß an den Reibflächen [dort (40), (80)] eine reibschlüssige Verbindung zwischen den Bremsbelägen und der Bremsscheibe entsteht. Die Kühlung der Vollscheibenbremse erfolgt über in der Bremsscheibe in radialer Richtung angeordnete Kanäle [dort ventilation channels (42)], die von der Kühlluft durchströmt werden. Bei dieser Schrift ist nachteilig, daß die Reibungswärme von den Reibflächen zu den radialen Kanälen übertragen werden muß, was zur Erwärmung der Bremsscheibe führt. Eine elastische Verformung führt auch hier, wie vorstehend erläutert, zu einem überproportionalen Verschleiß am Außendurchmesser.

Aus der DE-OS-27 46 758 ist eine Bremsscheibenkonstruktion mit unterschiedlichen Ausgestaltungen von Kühlkanälen bekannt. Die DE-OS-27 46 758 zeigt eine Bremsscheibe [dort (53)] mit Bremsflächen zu beiden Seiten, die mit dem Fahrzeugrad [dort (12)] drehfest, aber begrenzt axialbewegbar verbunden ist. Zu beiden Seiten der Bremsscheibe sind im Bremsgehäuse drehgesicherte, aber axialverschiebliche Bremsbacken [dort (88)] vorgesehen, die je aus einer z. B. metallischen Bremsbackenscheibe [dort (89)] mit auf der Seite der Bremsscheibe befestigten Bremsbelagelementen [dort (97)] bestehen, welche zusammen je eine große ringförmige Berührungsfläche bilden. Durch das Ausdehnen von fluidisch betätigten Blasen [dort (116, 117)] werden die Backenscheiben derart betätigt, daß die Bremsbelagsegmente in Reibberührung mit den zugeordneten Bremsflächen [dort (56, 57)] der Bremsscheibe gelangen. Zwischen den die beiden Bremsflächen bildenden Wänden der Bremsscheibe sind mehrere bogenförmige Zwischenwände [dort (80)] vorgesehen, die mehrere in Umfangsrichtung in Abständen voneinander angeordnete radiale Kanäle begrenzen, die an ihren inneren Enden [dort (83)] den Innenmantel [dort (58)] und an ihren äußeren Enden [dort (84)] den Außenmantel [dort (54)] der Bremsscheibe durchsetzen; diese Kanäle stellen Kühlmittel dar. Zwischen benachbarten Kanal-Trennwänden sind im wesentlichen radiale, einwärts gerichtete Schaufeln [dort (86)] zur Luftverwirbelung und damit zur Unterstützung der Wärmeabfuhr vorgesehen. Die Kanäle sind so ausgebildet, daß an der Außenumfangsfläche der Bremsscheibe ein Unterdruck erzeugt und daher im Bereich der Bremsscheiben-Mitte Kühlluft in das Bremsgehäuse gesaugt wird. Bei einer Ausführungsform sind die Kanäle als auswärts divergierende bogenförmige Kanäle [dort (82)] ausgestaltet und ihre Krümmung ist entgegengesetzt der Drehrichtung der Bremsscheibe bei Vorwärtsfahrt; bei einer anderen Ausführungsform sind die Kanäle als S-förmige Kanäle [dort (142)] ausgebildet und sie divergieren ebenfalls auswärts, jedoch sind ihre Einlässe [dort (144)] in Drehrichtung der Bremsscheibe bei Vorwärtsfahrt gerichtet. Auch bei dieser Schrift muß die Bremswärme durch die Bremsscheibe zu den Kühlkanälen geleitet werden; ein weiterer Weg zur Wärmeableitung wird durch die fluidisch betätigten Blasen verhindert. Die Belagpressung ist gleichmäßig, wird aber mit dem vergleichsweise hohen technischen Aufwand von zwei fluidisch betätigten Blasen erkauft.

An Bremsscheiben für Scheibenbremsen an schweren Nutzkraftfahrzeugen können im Bremsbetrieb hohe Temperaturen auftreten. So sind derartige Scheibenbremsen z. B. so ausgelegt, daß bei einer "worst case" Stop-Bremsung (beispielsweise Bremsung eines voll beladenen Auflieger-Zuges von 110 km/h bis zum Stillstand) die Scheibentemperatur auf bis zu 800 °C ansteigt. Die Abkühlung einer derart aufgeheizten Bremsscheibe auf die Umgebungstemperatur dauert je nach Betriebsbedingungen etwa 10 bis 20 Minuten.

Die größten Temperaturbelastungen erfahren Bremsscheiben allerdings nicht bei einer Stop-Bremsung, sondern bei Anpassungsbremsungen, wie sie z. B. bei einer Bergabfahrt über die Serpentinen eines Passes erfolgen. Hierbei wird (eine zwar unvernünftige, aber doch praktisch mögliche Fahrweise vorausgesetzt) bei jeder Serpentinenkehre die Geschwindigkeit über die Scheibenbremsen reduziert, so daß in kurzer zeitlicher Folge Anpassungsbremsungen stattfinden, ohne daß sich die Bremsscheiben in der Zwischenzeit haben abkühlen können. Wie die Erfahrung zeigt, können auf diese Weise an der Bremsscheibe auch Temperaturen um 1000 °C auftreten.

Bei der erstgenannten, vorbekannten Schrift sind die Bremsbelag-Elemente aus metallischem oder gut wärmeleitendem Material ausgeführt, so daß die Reibungswärme gut zu den Bremsschuhen übertragen wird (vgl. Spalte 2, Zeilen 30-35). Bei einer Scheibenbremse nach dieser Schrift wird, grundsätzlich betrachtet, die Bremsscheibe zunächst aufgeheizt, worauf sich ein über den Bremsbelag und die Bremsscheibe bis zur Umgebungstemperatur erstreckendes Temperaturgefälle ausbildet, und aufgrund dieses Temperaturgefälles und der gut wärmeleitenden Materialien erfolgt dann der Abbau der in der Bremsscheibe gespeicherten Reibungswärme.

Zunächst wird jedoch, wie gesagt, die Bremsscheibe aufgeheizt, und durch die üblicherweise ebenfalls gute Wärmeleitfähigkeit der Bremsscheibe wird auch die Temperatur der Radnabe erhöht, die mit der Bremsscheibe verbunden ist (vgl. Spalte 4, Zeilen 30-35). Wird auf diesem Wege die Nabe unzulässig über eine Temperatur von z. B. 120 °C erwärmt, was bei den erwähnten hohen Grenztemperaturen von Bremsscheiben leicht möglich ist, so wird das Fett in den Wälzlager-Lagerringen der Nabe dünnflüssiger und wird durch die Zentrifugalkraft nach außen gedrückt. Dieser Zustand kann zum Ausfall der Lager-Schmiereigenschaften und damit zur Schädigung einer Radnabe führen. Verwendet man für hohe Temperaturen spezielle Dichtungen und ein Spezialfett, so besteht die Gefahr, daß bei Wartungsarbeiten Dichtungen und Fett falscher Art eingesetzt werden, was zum Lagerausfall führt.

Der Erfindung liegt deshalb die Aufgabe zugrunde, eine Vollscheibenbremse entsprechend der eingangs genannten Schrift so zu verbessern, daß die Wärmeabfuhr verbessert wird, ohne die Radnabentemperatur zu erhöhen. Diese Aufgabe wird durch die im Patentanspruch 1 angegebene Erfindung gelöst. Weiterbildungen und vorteilhafte Ausführungsbeispiele der Erfindung sind in den Unteransprüchen angegeben.

Die Erfindung hat den Vorteil, daß die heißen Teile, nämlich die unten erläuterte mindestens eine Reibscheibe (7) oder (8) quasi statisch sind [nur verschieblich, nicht dynamisch umlaufend]; sie hat weiter den Vorteil, daß durch die einfache Anordnung der Bauelemente nur ein geringer Wartungsaufwand erforderlich ist.

Vorteilhafterweise sind die wärmeaufnehmenden Teile nicht an der Radnabe (2) befestigt; die mindestens eine Reibscheibe (7) oder (8) ist über einen langen Wärmeleitweg direkt mit der Fahrzeugachse (2) verbunden.

Eine Weiterbildung der Erfindung, bei der die unten erläuterte Rotorscheibe (6) zwischen den Reibscheiben (7) und (8) angeordnet ist, hat den Vorteil, daß der empfindliche Teil, nämlich die Rotorscheibe, gut geschützt ist, und die komplettierte Zuspanneinheit somit gut gekapselt gegenüber Umwelteinflüssen wie Wasser oder Staub ist.

Die Weiterbildung der Erfindung, bei der Bremsbelag-Segmente (21, 22) fest mit der Rotorscheibe verbunden sind, hat den Vorteil, daß sich aufgrund der relativ leichten Bremsbelag-Segmente ein vergleichsweise geringes Trägheitsmoment für die Rotorscheibe (6) ergibt.

Eine Weiterbildung der Erfindung, bei der die Bremsbelag-Segmente (21, 22) einen ersten Flächenanteil abdecken, hat den Vorteil, daß eine große Reibfläche gegeben ist, was die Stabilität der Bremsbelag-Segmente erhöht.

Über eine Reibscheibe (7) oder (8) wird durch die rotationssymmetrisch aufgebaute Zuspanneinrichtung eine von der Zuspannkraft unabhängige und über die Reibfläche betrachtet gleichmäßige Belagpressungsverteilung erreicht, wodurch der Verschleiß erstens als solcher verringert, aber zweitens vor allem vergleichmäßigt wird. Hierdurch erhöht sich die Fahrleistung, nach der eine verschleißbedingte Auswechslung der Rotorscheibe (6) zu erfolgen hat.

Gegenüber anderen Scheibenbremsen-Ausführungen, bei denen die umlaufende Keramikscheibe als ausgewuchtetes Verbundteil Keramikscheibe/Stahlnabe ausgeführt ist, weist die Erfindung den Vorteil einer keramikgerechten Scheiben-Ausbildung auf.

Die Erfindung wird im folgenden anhand eines Ausführungsbeispiels, das in den Zeichnungen dargestellt ist, näher erläutert.

Es zeigen:
- Fig. 1: die Vollscheibenbremse als Übersicht, unterteilt in die drei Teilansichten,
- Fig. 1a: die Seitenansicht von rechts,
- Fig. 1b: einen Schnitt AA, dessen Schnittverlauf in Fig. 1c eingezeichnet ist und
- Fig. 1c: einen Schnitt BB, dessen Schnittverlauf in Fig. 1b eingezeichnet ist;
- Fig. 2: einen vergrößerte Darstellung von Fig. 1b;
- Fig. 3: eine vergrößerte Darstellung von Fig. 1c;
- Fig. 4: eine Ausführungsform mit der abzubremsenden Scheibe als Schiebeteil;
- Fig. 5: eine Ausführungsform, bei der Bremsbelag-Segmente axial verschieblich in der abzubremsenden Scheibe gelagert sind.
- Fig. 6: die als Rotorscheibe ausgebildete abzubremsende Scheibe für die Ausführungsformen nach Fig. 2 bis Fig. 4, bei denen die Luftführungskanäle mit geraden seitlichen Begrenzungsflächen ausgestaltet sind;
- Fig. 7: die Rotorscheibe für die Ausführungsformen nach Fig. 2 bis Fig. 4, bei denen die Luftführungskanäle mit gekrümmten seitlichen Begrenzungsflächen ausgestaltet sind;
- Fig. 8: die Rotorscheibe für die Ausführungsform nach Fig. 5.

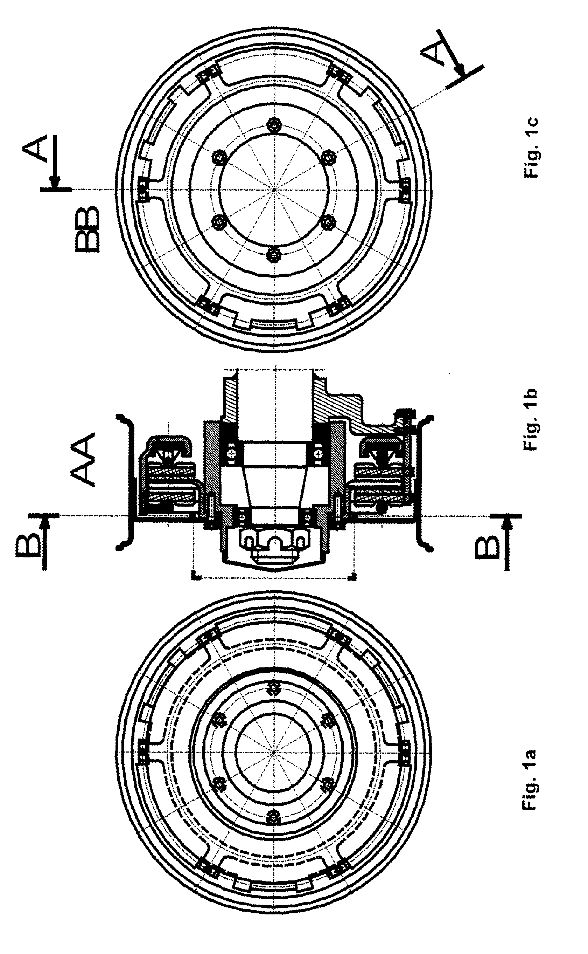

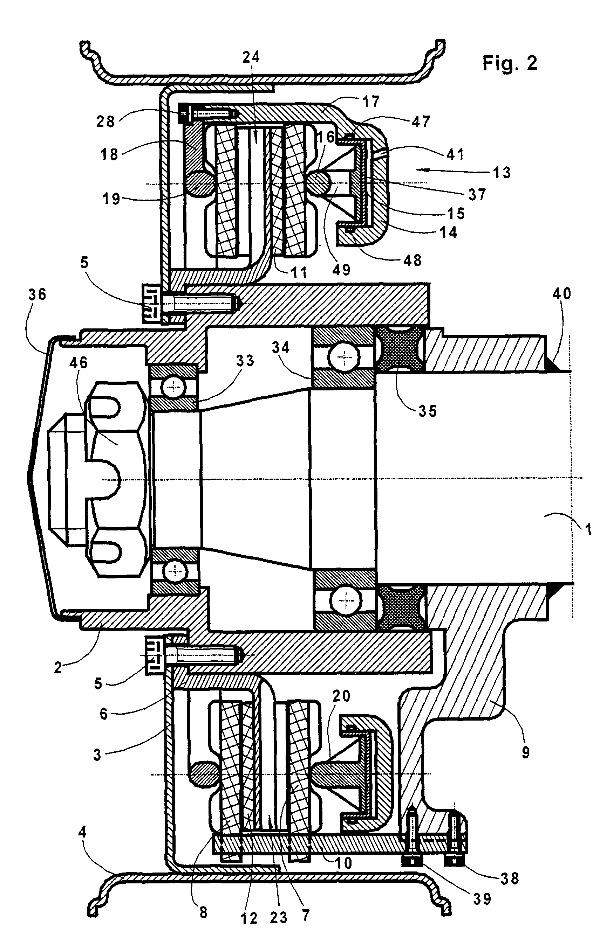

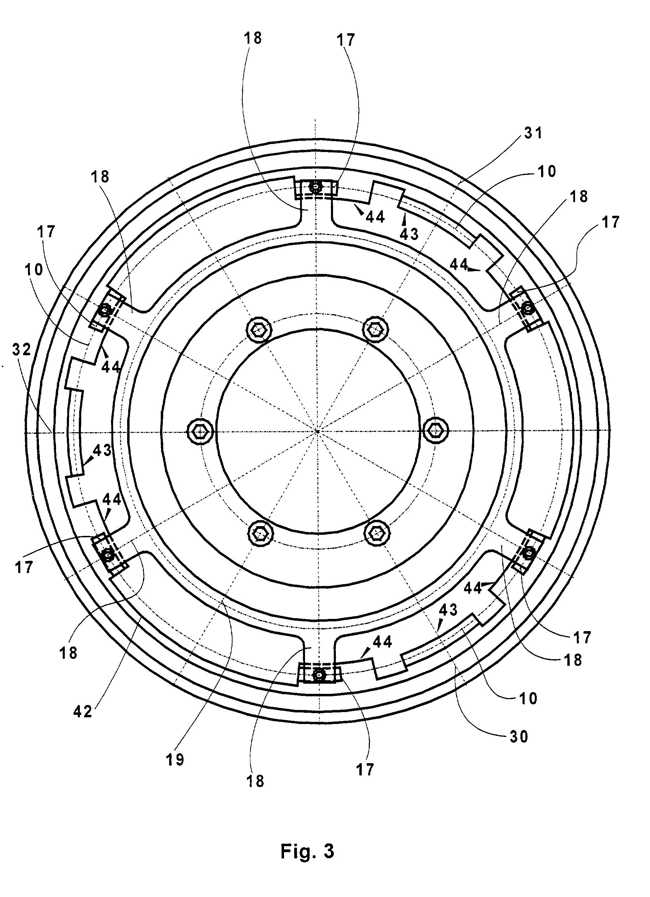

Mit der Übersicht nach Fig. 1 sind die Schnittverläufe nach Fig. 2 und Fig. 3 beschrieben; die Darstellungen in Fig. 1 werden daher anhand der vergrößerten Darstellungen nach Fig. 2 und Fig. 3 erläutert.

Entsprechend Fig. 2 ist an einer Fahrzeugachse (1) die Radnabe (2) eines Rades (3) über die Schraubverbindung (46) achsfest aber durch die Drehlager (33) und (34) drehbar mit der Fahrzeugachse (1) verbunden. Der Lagerbereich ist durch die Dichtung (35) und die Abdeckung (36) gegenüber den das Lager umgebenden Bereichen abgedichtet.

Das Rad (3) ist zusammen mit seinem Felgenbett (4) über Verbindungsschrauben (5) mit der Radnabe (2) verbunden; über diese Verbindungsschrauben ist auch eine zur Bremsung des Rades (3) dienende, als Rotorscheibe ausgebildete abzubremsende Scheibe (6) fest mit der Radnabe (2) verbunden.

Ein Bremsbelag ist in ringförmiger Grundform ausgebildet. Auf der abzubremsenden Scheibe (6) sind zu beiden Seiten Bremsbeläge drehgesichert mit der Scheibe verbunden, wobei in der Ausführungsform nach Fig. 1 die Bremsbeläge auf die Rotorscheibe (6) aufgeklebt sind; in Richtung zu der unten erläuterten ersten inneren Reibscheibe (7) ist dies der in ringförmiger Grundform ausgebildete Bremsbelag (11), in Richtung zu der unten erläuterten zweiten äußeren Reibscheibe (8) ist dies der in ringförmiger Grundform ausgebildete Bremsbelag (12).

Es ist eine ringförmige Halterung für die Bremsmomentabstützung und die Bremsenzuspannung vorgesehen; diese ringförmige Bremsträgerhalterung (9) ist über die Befestigung (40) formschlüssig mit der Fahrzeugachse (1) verbunden. An der Bremsträgerhalterung (9) sind, über den Umfang verteilt und in jeweils 120 Grad gegeneinander abgesetzt [in der bezüglich Fig. 1c vergrößerten Darstellung Fig. 3 sind dies die Winkelpositionen (30), (31) und (32)], drei Bremsträger (10) jeweils fest über die Schrauben (38) und (39) mit der Bremsträgerhalterung (9) verbunden. Die Bremsträger (10) sind als zylinderförmige Elemente mit dem Querschnitt eines Kreisring-Winkelsegmentes ausgebildet [Kreisring-Winkelsegment: aus dem gesamten 360°-Kreisring ist das Segment eines bestimmten Winkels ausgeschnitten] .

Zur Herstellung einer reibschlüssigen Verbindung mit der Rotorscheibe (6) sind eine erste innere Reibscheibe (7) und eine zweite äußere Reibscheibe (8) vorgesehen; beide Reibscheiben sind als Kreisring-Scheiben mit einem inneren und einem äußeren Durchmesser ausgebildet und sie sind durch die Bremsträger (10) in Drehrichtung gegenüber der Fahrzeugachse (1) gesichert, wobei sie in axialer Richtung zur Anlage an die Rotorscheibe (6) verschieblich sind. Mit ihrer Drehsicherung übertragen die drei Bremsträger (10) das Bremsmoment, das durch den Reibschluß zwischen der abzubremsenden Scheibe (6) einerseits und den ersten (7) und zweiten (8) Reibscheiben andererseits erzeugt wird, auf die Fahrzeugachse (1).

Der Reibschluß wird durch eine Zuspanneinrichtung (13) hergestellt, welche im Falle einer Bremsung eine Zuspannkraft erzeugt, die als Normalkraft von der ersten (7) und zweiten (8) Reibscheibe auf die Rotorscheibe (6) wirkt.

Für die Zuspanneinrichtung (13) sind folgende Teile vorgesehen: Ein hydraulischer Ringzylinder (14), dessen Grundfläche als kreisrunder Ring mit einem inneren und einem äußeren Durchmesser ausgebildet ist und dessen Kolbenraum (37) entsprechend der Ringzylinder-Grundfläche eine ringzylindrische Form aufweist, wobei dem Kolbenraum (37) über die Bohrung (41) über eine nicht dargestellte Ventileinrichtung Hydraulikflüssigkeit zu- bzw. abgeführt wird, mit einem Ringkolben (15), welcher für die Einleitung der Zuspannkraft einstückig mit einer ringzylinderförmigen Kolbenstange (20) verbunden ist, welche an ihrer dem Ringkolben (15) abgewandten Seite mit einem Kolbenstangen-Ring (16) ausgestattet ist, und bei dem die Dichtung des Kolbenraumes (37) über die Kolbenraum-Dichtungen (47) und (48) erfolgt; sechs als Zugelemente dienende Ringzylinder-Erweiterungsstäbe (17), die als Erweiterung des äußeren Mantels des Ringzylinders (14) in Form von Stäben mit dem Querschnitt eines Kreisring-Winkelsegmentes ausgebildet sind; ein ringförmiger Kraftübertragungsring (19) zur Übertragung der Zuspannungs-Reaktionskraft, welcher mit sechs radialen Kraftübertragungs-Stäben (18) ausgestattet ist, die im Endbereich ihrer radialen Erstreckung über eine Bohrung verfügen; sechs Befestigungsschrauben (28) zur Verbindung der Kraftübertragungs-Stäbe (18) über ihre Bohrung mit den Ringzylinder-Erweiterungsstäben (17).

Die Kolbenstange (20) mit dem Kolbenstangen-Ring (16) weist längs dem Umfang verteilte Kühlluft-Durchbrüche (49) auf, um eine durchgehende Ventilation der Bremse sicherzustellen.

Es sei angemerkt, daß die hier erläuterte Zuspannung unter Verwendung des hydraulischen Ringzylinders (17) auch durch einen entsprechend ausgestalteten pneumatischen Zylinder ersetzt werden kann; es ist außerdem möglich, die Zuspannung als mechanische oder elektromechanische Einrichtung auszugestalten.

Im montiertem Zustand der Zuspanneinrichtung (13) ist der mit dem Ringkolben (15) zusammengefügte Ringzylinder (14) über die mit ihm verbundenen Ringzylinder-Erweiterungsstäbe (17) an die Kraftübertragungs-Stäbe (18) angelegt, und alle diese Teile sind mit Hilfe der Befestigunsschrauben (28) miteinander verbunden.

Die derart verbundene Zuspanneinrichtung (13) ist frei über der axial nicht verschieblichen Rotorscheibe (6) und den achsfesten Reibscheiben (7) und (8) aufgehängt; sie stellt einen schwimmenden und über 360° umlaufenden Sattel dar, bei dem der Belagverschleiß durch vermehrte Zustellung der Kolbenstange (20) ausgeglichen wird [die nicht explizit dargestellte Lüftspielnachstellung erfolgt durch die dem Fachmann bekannte elastische Ausbildung der Kolbenraum-Dichtungen (47) und (48)]. Zum Verschleißausgleich wird also mit der sich vergrößernden Kolbenstangen-Zustellung die Zuspanneinrichtung axial gegenüber der axial nicht verschieblichen Rotorscheibe (6) verschoben; diese Axialverschiebung stellt den Verschleißausgleich dar. Mit dem Verschleiß werden die Bremsbeläge (11) und (12) dünner, sie verändern jedoch nicht die auf ihre Reibflächen bezogene axiale Lage gegenüber der Fahrzeugachse (1).

Die beiden Reibscheiben, die erste (7) und die zweite (8) Reibscheibe, sind ihrer Form gleichartig aufgebaut. Neben ihrer oben erwähnten Grundform als Kreisring-Scheiben verfügen sie an ihrer äußeren Begrenzung über zwei Arten von Ausnehmungen in Form von Kreisring-Winkelsegmenten; dies wird an der in Fig. 1c sichtbaren Außenkontur (42) für die zweite äußere Reibscheibe (8) erkennbar.

Die erste Art der Kreisring-Winkelsegment-Ausnehmungen stellen die drei Ausnehmungen (43) dar. In Fig. 3, der vergrößerten Darstellung von Fig. 1c, ist gezeigt, daß die äußeren Begrenzungsflächen der Segmentausnehmungen (43) gerade an den seitlichen Begrenzungsflächen der Bremsträger (10) anliegen, was die bereits vorstehend erläuterte Drehsicherung der beiden Reibscheiben (7) und (8) bewirkt.

Die zweite Art der Ausnehmungen ist durch die sechs Kreisring-Winkelsegment-Ausnehmungen (44) gegeben; die Mittellinien für diese Ausnehmungen sind um jeweils ±30° versetzt gegenüber den Bremsträger-Winkelpositionen (30), (31) und (32) angeordnet.

Fig. 3 zeigt, daß im montierten Zustand die Reibscheiben (7) und (8) derart eingelegt sind, daß die Ringzylinder-Erweiterungsstäbe (17) abwechselnd an der linken und der rechten seitlichen Begrenzungsfläche der Kreisring-Winkelsegment-Ausnehmungen (44) anliegen. Mit der Fixierung durch die Befestigunsschrauben (28) ist die Zuspanneinrichtung (13) als solche zentriert und montiert und es ist weiter die Drehsicherung der Reibscheiben (7) und (8) gegenüber derZuspanneinrichtung (13) in beiden Drehrichtungen sichergestellt.

Die Montage des Rades (3) mit der Rotorscheibe (6) an der Nabe (2) an der Fahrzeugachse (1) einerseits und die Montage der Zuspanneinrichtung (13) an der Bremsträgerhalterung (9) und der Fahrzeugachse (1) andererseits wird in folgenden Schritten durchgeführt:
- Aufschieben der Bremsträgerhalterung (9) auf die Fahrzeugachse (1) und Verschweißung [Befestigung (40)].
- Aufschieben der Dichtung (35) und des Drehlagers (34) auf Fahrzeugachse (1).
- Einschieben Drehlager (33) in Radnarbe (2), dann Aufschieben dieses Zusammenbaus auf die Fahrzeugachse (1).
- Sicherung über Schraubverbindung (46), dann Aufsetzen der Abdeckung (36).
- Die drei Bremsträger (10) werden mit Schrauben (38), (39) mit der Bremsträgerhalterung (9) verbunden.
- Der hydraulische Ringzylinder (14) wird mit den Kolbenraum-Dichtungen (47), (48) und dem Ringkolben (15) mit der Kolbenstange (20) versehen.
- Diese soweit vorbereitete aber noch nicht komplettierte Zuspanneinrichtung (13) wird in die drei Bremsträger (10) eingeschoben.
- Einschieben der ersten inneren Reibscheibe (7), dann Nachschieben der komplett mit den ringförmigen Bremsbelägen (11) und (12) versehenen Rotorscheibe (6).
- Aufschieben der zweiten äußeren Reibscheibe (8) auf die drei Bremsträger (10).
- Auflegen der Kraftübertragungs-Stäbe (18) mit dem Kraftübertragungsring (19) und Befestigung mit den Schrauben (28); damit ist die Zuspanneinrichtung (13) sowohl in sich montiert als auch drehfest mit der Fahrzeugachse (1) verbunden.
- Aufsetzen des Rades (3) und Befestigung mit der Radnabe (2) über die Verbindungsschrauben (5).

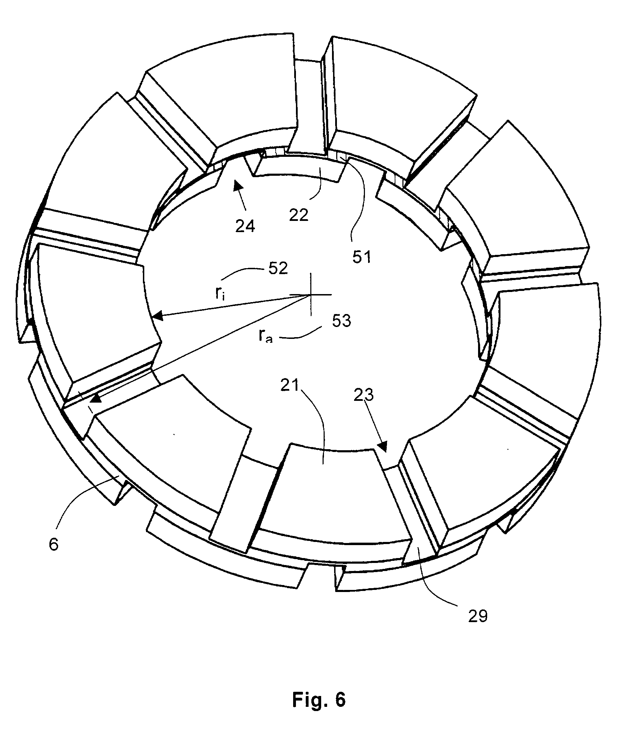

Im Bereich zwischen der Rotorscheibe (6) und den Reibscheiben (7) und (8) sind Kühlmittel vorgesehen, die als Kanäle zur Luftführung realisiert sind; diese sind in perspektivischer Darstellung in Fig. 6 gezeigt.

In Fig. 6 ist, um die Luftführungskanäle darzustellen, die Rotorscheibe (6) im Bereich der Innendurchmesser der Reibscheiben (7) und (8) gebrochen; durch diesen Bruch entsteht die schraffiert dargestellte Bruchfläche (51). In der Rotorscheibe (6) sind nach außen freie Luftführungskanäle vorgesehen; in Richtung der ersten inneren Reibscheibe (7) sind dies neun Luftführungskanäle (23) [der Übersicht halber ist dieses Bezugszeichen nur an einem der neun Luftführungskanäle eingetragen] und in Richtung der zweiten äußeren Reibscheibe (8) sind dies neun Luftführungskanäle (24) [der Übersicht halber ist dieses Bezugszeichen nur an einem der neun Luftführungskanäle eingetragen].

Für die Luftführungskanäle (23) sind in den Rotorscheiben auf der zur ersten Reibscheibe (7) weisenden Seite neun freie radiale Ausnehmungen (29) eingebracht [Bezugszeichen nur an einem Beispiel], welche als Basis für die zur ersten inneren Reibscheibe (7) sich erstreckenden Luftführungskanäle (23) dienen. Die durch diese radialen Ausnehmungen definierten seitlichen Begrenzungsflächen erstrecken sich durch den ringförmigen Bremsbelag bis zur Reibscheibe (7) [abgesehen von dem im ungebremsten Zusand vorhandenen Lüftspiel]. Sinngemäß gleichartige radiale Ausnehmungen sind in der Rotorscheibe (6) auf der zur zweiten äußeren Reibscheibe (8) weisenden Richtung vorgesehen. Entsprechend diesen radialen Ausnehmungen sind die seitlichen Begrenzungsflächen der Luftführungskanäle (23) und (24) als gerade Fächen ausgebildet.

Durch die Konstruktion der Luftführungskanäle sind die Bremsbeläge (11) und (12) in Form von je neun Bremsbelag-Segmenten (21) bzw. (22) ausgestaltet, deren Zusammensetzung die Grundform eines Kreisrings ergibt. Hierbei ist, wie in Fig. 6 dargestellt, der Kreisring-Bereich durch einem inneren Durchmesser rᵢ (52) und einem äußeren Durchmesser rₐ (53) festgelegt, innerhalb dessen die Bremsbelag-Segmente (21) bzw. (22) angeordnet sind. Die Fläche dieses Kreisring-Bereichs wird somit in einen ersten Flächenanteil für die Bremsbelag-Segmente und in einen zweiten Flächenanteil für die Luftführungskanäle aufgeteilt. Sowohl für den Bremsbelag (11) wie den Bremsbelag (12) stellt der erste Flächenanteil die Summe aus den Flächen der jeweils neun Bremsbelag-Segmente (21) bzw. (22) dar und die Summe aus den Grundflächen der jeweils neun Luftführungskanäle (23) bzw. (24) ergibt den zweiten Flächenanteil.

Zum Verständnis der Zeichnung sei darauf hingewiesen, daß in Fig. 2 die Rotorscheibe (6) in einer Drehposition gezeigt ist, bei der im oberen Teil der Zeichnung der Schnitt durch einen Kanal (24) und im unteren Teil der Zeichnung der Schnitt durch einen Kanal (23) geht. Die in Fig. 6 auf jeder Seite der Rotorscheibe (6) gezeigten je neun Bremsbelag-Segmente und Luftführungskanäle [(21) und (23) bzw. (22) und (24)] stellen ein Beispiel dar; diese Zahlen werden entsprechend den bei einer Realisierung vorliegenden topologischen Verhältnisse gewählt; auch ist es möglich, für den zu Reibscheiben (7) weisenden Bremsbelag (11) eine unterschiedliche Anzahl von Bremsbelag-Segmenten und Luftführungskanälen vorzusehen, als für den in Richtung zur Reibscheibe (8) weisenden Bremsbelag (12).

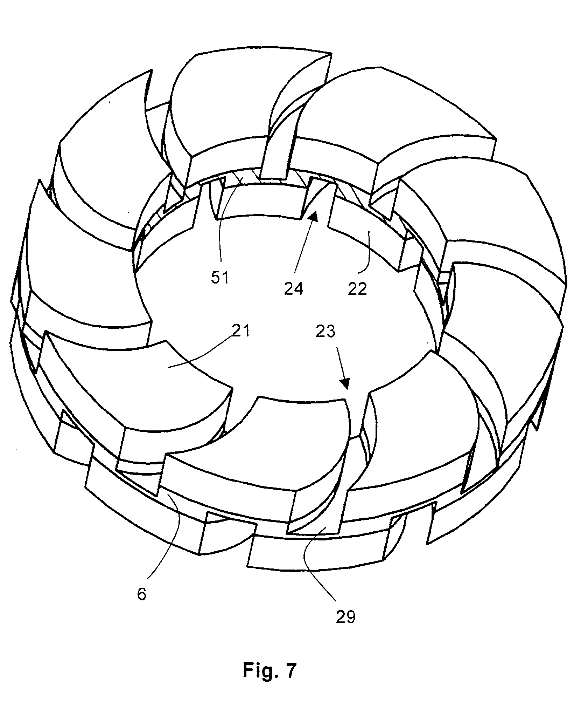

Fig. 7 zeigt die Rotorscheibe (6) mit einer andersartigen Ausgestaltung der Luftführungskanäle; hierbei ist die Rotorscheibe (6) in gleicher Weise wie in Fig. 6 gebrochen und die Bruchfläche (51) ist wiederum schraffiert dargestellt.

Bezüglich der Flächenverhältnisse gilt auch hier die unter Fig. 6 erläuterte Konstellation, daß nämlich der durch die Innendurchmesser rᵢ und Außendurchmesser rₐ (der Übersichtlichkeit halber in Fig. 7 weggelassen) definierte Kreisring-Bereich in einen ersten Flächenanteil für die Bremsbelag-Segmente und in einen zweiten Flächenanteil für die Luftführungskanäle aufgeteilt ist.

Im Unterschied zu den Luftführungskanälen nach Fig. 6 sind die radialen Ausnehmungen (29) in der Rotorscheibe (6) derart ausgestaltet, daß die seitlichen Begrenzungsflächen als gekrümmte Flächen ausgebildet sind. Die Kurvenform dieser gekrümmten Flächen ist nach Kriterien, die aus der Technik von Turbinenschaufeln bekannt sind, so ausgelegt, daß die Luft, während sie sich vom inneren zum äußeren Bereich der Rotorscheibe (6) bewegt, beschleunigt wird, so daß sich ein erhöhter Luftdurchsatz ergibt.

Zum Beispiel ist dann auch, wie in Fig. 7 angedeutet, unter Berücksichtigung der durch die Wärmeaufnahme bedingten Volumensvergrößerung der Querschnitt eines Luftführungskanals (23) oder (24) an seinem radial inneren Eingangsbereich kleiner als bei seinem Ausgangsbereich am radial äußeren Ende der Rotorscheibe (6).

Die Anordnung der radialen Ausnehmungen (29), sowohl entsprechend Fig. 6 [gerade seitliche Begrenzungsflächen] als auch entsprechend Fig. 7 [gekrümmte seitliche Begrenzungsflächen] ist derart vorgenommen, daß sie an einer Seite der Rotorscheibe (6) in Bezug auf die andere Seite zu versetzten Winkelpositionen angeordnet sind. Entsprechend den jeweils neun Luftführungskanälen auf jeder Seite sind diese auf beiden Seite in jeweils 60°-Winkelabständen zueinander angeordnet; die gegenseitige Versetzung ergibt sich dadurch, daß die Anordnung aus neun Luftführungskanälen auf einer Seite gegenüber der Anordnung der neun Luftführungskanäle auf der anderen Seite um einen Winkel von 30° verdreht ist.

Mit dem gegenseitigen Versatz der Luftführungskanäle ergibt sich eine verbesserte Kühlung der Rotorscheibe (6), da die Kühlung ganz überwiegend durch Konvektion über die Luftführungskanäle stattfindet.

Bei dieser Anordnung ist einem Bremsbelag-Segment auf einer Seite der Rotorscheibe (6) an genau gleicher Stelle auf der anderen Seite ein Luftführungskanal gegenübergestellt. Dieser Kanal kühlt durch Konvektion auf seiner Seite einen Bereich der Rotorscheibe (6), der von dem Bremsbelag-Segment auf der direkt gegenüberliegenden Seite aufgeheizt wird. Durch seine schlechte Wärmeleitfähigkeit wird dieses Bremsbelag-Segment zwar nicht sofort Bremswärme in diesen Bereich übertragen, jedoch kann sich der Bereich bei vielen sukzessiven Bremsungen aufheizen. Der direkt gegenüberliegende Luftführungskanal stellt also sicher, daß die auf diese Weise in die Rotorscheibe (6) gelangte Bremswärme durch Konvektion zügig abgebaut wird.

Neben der schlechten Wärmeleitfähigkeit der Bremsbelag-Segmente weisen die Reibscheiben (7) und (8) und die Rotorscheibe (6) eine gute Wärmeleitfähigkeit auf. Die Reibungswärme entsteht an den Reibflächen zwischen den Reibscheiben (7) und (8) und den Bremsbelag-Segmenten (21) bzw. (22) der Rotorscheibe (6). Da über die Luftführungskanäle in der Rotorscheibe (6) die Kühlluft direkt über die Reibungsflächen der Reibscheiben (7) und (8) geführt wird, wird die Reibungswärme direkt am Ort ihrer Entstehung abgebaut, so daß die Aufheizung der Bremsbelag-Segmente (21) und (22) vergleichsweise sehr begrenzt bleibt.

Die Bremsbelag-Segmente (21, 22) wirken außerdem wärmeisolierend zwischen den Reibflächen der Reibscheiben (6) und (7) und der Rotorscheibe. Beide Effekte, die begrenzte Aufheizung der Bremsbelag-Segmente selbst und ihr Isoliereinfluß bewirken, daß auch die Rotorscheibe (6) nur in einem vergleichsweise sehr geringen Maße aufgeheizt wird.

Die Rotorscheibe (6) ist üblicherweise aus einem metallischen Werkstoff gefertigt, was allerdings nicht zwingend ist. Eine metallische Rotorscheibe (6) ist gut wärmeleitend; wenn sie bei der Bremsung, wie erläutert, vergleichsweise kühl bleibt, so kann auch die Radnabe nicht in einem Maß aufgeheizt werden, die zu ihrer Schädigung führt.

Das Material für die beiden Reibscheiben (7) und (8) muß eine hohe Verschleißfestigkeit, eine hohe Temperaturstabilität, eine gute Wärmeleitfähigkeit und ein möglichst geringes spezifisches Gewicht aufweisen. Hierfür eignen sich in ganz besonderem Maße Keramik-Verbundwerkstoffe, bei denen in die Keramik-Grundsubstanz Kohlefasern als Sinterelemente eingebettet sind, welche die Elastizität und das Thermoschockverhalten stark verbessern; Reibscheiben aus einem derartigen Werkstoff verfügen z. B. im Vergleich zu Grauguß über ca. die 3-fache Wärmeleitfähigkeit und wiegen dabei nur die Hälfte, außerdem sind sie praktisch verschleißfrei. Ein geeigneter Keramik-Verbundwerkstoff ist z. B. das faserverstärkte SISIC.

Die Ausführung der Reibscheiben (7) und (8) in Keramik-Verbundwerkstoff stellt aufgrund der Materialeigenschaften und der keramikgerechten Ausgestaltung eine bevorzugte Ausführungsform der Erfindung dar. Grundsätzlich können die Reibscheiben unter Verwendung aller Arten von Bremsscheibenmaterialien, z. B. von Stahlguß, Grauguß oder ALMMC [Scheibenwerkstoff auf Aluminiumbasis] gefertigt werden.

Die erläuterte Kühlung durch die Luftführungskanäle (23) und (24) stellt die erste Wärmeabfuhr direkt von den Reibflächen dar. Eine zweite Wärmeabfuhr erfolgt vollumfänglich an den der Rotorscheibe (6) abgewendeten seitlichen Begrenzungsflächen der Reibscheiben (6) und (7). Diese Begrenzungsflächen liegen praktisch frei [Hinweis auf die erläuterten Kühlkanäle (49), praktisch "linienförmige" Auflage des Kolbenstangen-Ringes (16) und des Kraftübertragungsringes (19) längs den jeweiligen Berührungs-Kreislinien mit den Reibscheiben (7) bzw. (8)]. Die Wärmeabfuhr erfolgt von diesen seitlichen Begrenzungsflächen direkt durch Konvektion an die Umgebungsluft, wobei die Konvektion durch den Fahrtwind noch verstärkt wird. Keramik weist neben seiner guten Wärmeleitfähigkeit auch eine gute Wärmespeicherfähigkeit auf. Zunächst wird also die in die Reibscheiben übertragene Wärmemenge "zwischengespeichert" und dann, wie erläutert, schnell abgebaut.

Es sei noch erwähnt, daß es auch möglich ist, für die Reibscheiben (7) und (8) eine Fluidkühlung vorzusehen. Bei einer derartigen Ausführung sind in einer oder beiden Reibscheiben Fluidkühlkanäle mit je einem Anschluß für den Fluideinlauf und den Fluidauslauf zur Bildung eines Fluidkreislaufes vorgesehen. Ein derartiger Fluidkühlkanal ist z. B. als Kanal mit rundem Querschnitt realisiert, der sich, eingebettet in die Reibscheibe, ausgehend von der Stelle des Fluideintrittes bis zur Stelle des Fluidaustrittes erstreckt und als Kreisbogensegment mit einem bestimmten Radius ausgebildet ist [z. B. über einen Umfangswinkel von 300°, d. h. fast über den vollen Umfang].

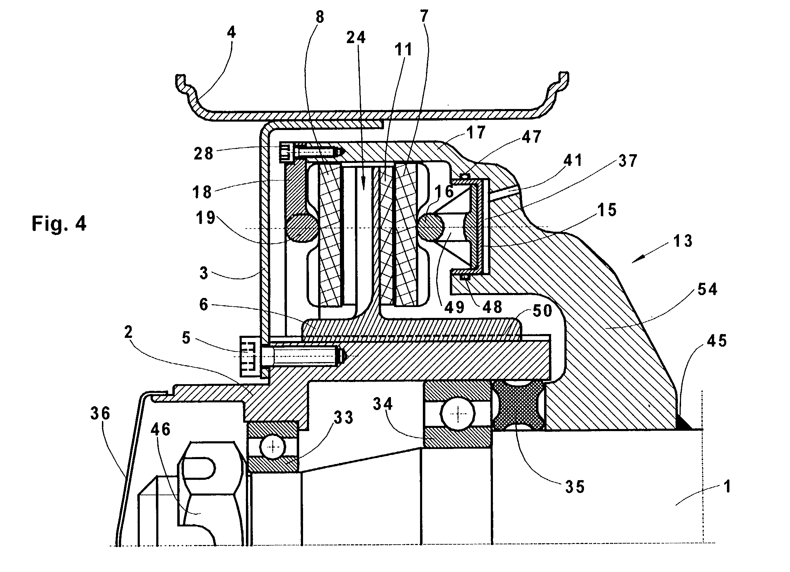

In der Ausführungsform nach Fig. 4 ist die Zuspanneinrichtung (13) über eine Befestigung (45) fest mit der Fahrzeugachse (1) verbunden; sie stellt daher einen festen über 360° umlaufenden Sattel dar. [In Fig. 4 ist nur der obere Teil von Fig. 2 in der neuen Ausführungsform dargestellt, weil damit die Veränderungen an der Zuspanneinrichtung (13) hinreichend erläutert sind.]

Die Rotorscheibe (6) ist nicht mehr fest mit der Radnabe (2) verbunden; statt dessen ist sie als Schiebeteil ausgeführt, welches über eine Längsverzahnung (50) drehfest aber axial verschieblich mit der Radnabe (2) verbunden ist. Bei der axial festen Zuspanneinrichtung (13) wird bei Belagverschleiß durch vermehrte Zustellung der Kolbenstange (20) die Rotorscheibe (6) selbst axial verschoben, und diese Axialverschiebung stellt den Verschleißausgleich dar. Die mit dem Verschleiß dünner werdenden Bremsbeläge (11) und (12) verändern mit dem Verschleiß die auf ihre Reibflächen bezogene axiale Lage gegenüber der Fahrzeugachse (1).

Bei Fig. 4 ist die Zuspanneinrichtung (13) in Form eines Zuspannträgers (54) ausgebildet, welcher über die Befestigung (45) formschlüssig mit der Fahrzeugachse (1) verbunden ist. Der separat ausgebildete hydraulische Ringzylinder (14) nach Fig. 2 stellt bei Fig. 4 ein direkt in den Zuspannträger (54) integriertes Bauteil dar.

Für eine Zuspanneinrichtung nach Fig. 4 lassen sich die erläuterten Rotorscheiben nach Fig. 6 und Fig. 7 in gleicher Weise einsetzen; durch die erläuterte gebrochene Darstellung sind die Unterschiede von einer Verwendung in einer Zuspanneinrichtung nach Fig. 2 [Rotorscheibe (6) fest mit der Fahrzeugachse (1) verbunden] im Vergleich zu einer Verwendung in einer Zuspanneinrichtung nach Fig. 4 [Rotorscheibe (6) über Längsverzahnung (50) drehfest mit der Fahrzeugachse (1) verbunden] in diesen Zeichnungen gar nicht sichtbar, da sie nur denjenigen Teil der Rotorscheibe (6) betreffen, der durch die Brechung wegfällt.

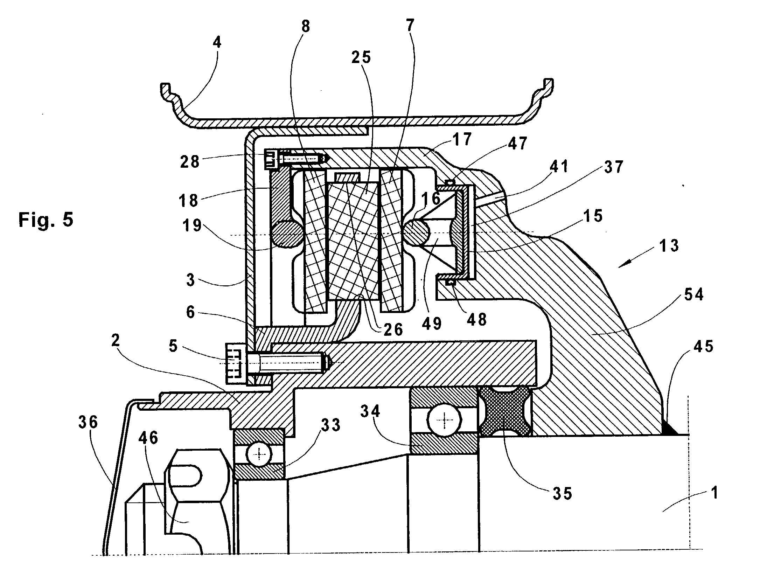

Die Zuspanneinrichtung in der Ausführungsform nach Fig. 5 ist identisch zu der Ausführungsform nach Fig. 4, mit der Ausnahme, daß die Rotorscheibe (6) wie in Fig. 2 über die Verbindungsschrauben (5) fest mit der Radnabe (2) verbunden ist.

Der Bremsbelag ist in Form von plattenförmig ausgebildeten Bremsbelagbauteilen ausgeführt; diese Bremsbelagplatten (25) sind innerhalb der Rotorscheibe (6) angeordnet. Die Bremsbelagplatten (25) sind auf der Rotorscheibe in entsprechende Öffnungen, in Ausnehmungen (26) eingeschoben; sie sind in der Rotorscheibe (6) drehfest, aber axial verschieblich gelagert, so daß über die Bremsbelagplatten (25) Bremsmoment, welches durch den Reibschluß dieser Platten mit der ersten (7) und zweiten (8) Reibscheibe entsteht, auf die Rotorscheibe (6) übertragen wird. Um die Formstabilität zu erhöhen, ist es möglich, für die Bremsbelagplatten (25) je eine Stützhülse vorzusehen, welche mit diesen Platten längs ihrer Außenkontur, und zwar im Bereich ihrem axialen Verschiebung, formschlüssig verbunden sind; diese Stützhülsen stellen bei der Bremsbelagplatten-Verschiebung den gleitenden Kontakt mit der inneren Kontur der Ausnehmungen (26) der Rotorscheibe her, in denen die Bremsbelagplatten (25) gelagert sind.

Bei der axial festen Zuspanneinrichtung (13) und der axial nicht verschieblichen Rotorscheibe (6) werden bei Belagverschleiß durch vermehrte Zustellung der Kolbenstange (20) die Bremsbelagplatten (25) axial verschoben, und diese Axialverschiebung stellt den Verschleißausgleich dar; die mit dem Verschleiß dünner werdenden Bremsbelagplatten (25) verändern mit dem Verschleiß ihre axiale Lage gegenüber der Fahrzeugachse (1).

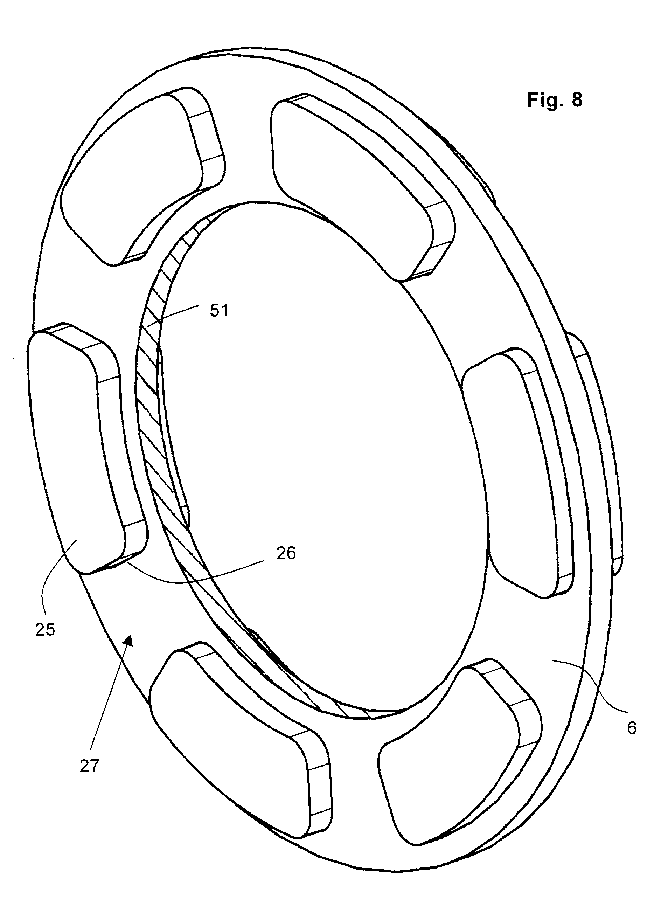

Fig. 8 zeigt, in der aus Fig. 6 und Fig. 7 bekannten gebrochenen Art, die Rotorscheibe (6) in der Ausführungsform, wie sie für eine Zuspanneinrichtung (13) nach Fig. 4 ausgestaltet ist. Längs des vorstehend beschriebenen Kreisring-Bereichs der Rotorscheibe (6) sind sechs Ausnehmungen (26) eingebracht, in welche sechs Bremsbelagplatten (25) eingeschoben sind; in der perspektivischen Darstellung ist erkennbar, daß die aufgrund der benötigten Verschleißreserve vergleichsweise breit ausgestalteten Bremsbelagplatten (25) im eingeschobenem Zustand aus der vergleichsweise schmalen Rotorscheibe (6) an beiden Seiten herausragen, so daß sich zwischen jeweils benachbarten Bremsbelagplatten (25) freie Zwischenräume (27) bilden [Bremsbelagplatten (25), Ausnehmungen (26), freie Zwischenräume (27) sind an einer der sechs Bremsbelagplatten (25) eingezeichnet]. Ergänzt sei, daß statt einer Zahl von sechs Ausnehmungen (26) konstruktionsbedingt natürlich auch jede andere Zahl von Ausnehmungen gewählt werden kann.

Die freien Zwischenräume (27) bilden im zusammengebauten Zustand der Zuspanneinrichtung (13) entsprechend Fig. 4 Luftzirkulationspfade zwischen den sechs Bremsbelagplatten (25) und der ersten (7) und zweiten (8) Reibscheibe, und diese Luftzirkulationspfade stellen die Kühlmittel für die Scheibenbremse dar. Die aufgrund der freien Zwischenräume (27) sich ergebenden Luftzirkulationspfade bewirken eine grundsätzlich gleichartige Kühlung der Rotorscheibe (6), wie dies im Zusammenhang mit den Luftführungskanälen (23) und (24) anhand von Fig. 6 und Fig. 7 erläutert ist. Die Ausführungsform der Kühlung nach Fig. 8 hat gegenüber diesen Lösungen den Vorteil, daß keine großflächige Verbindung [dort durch Klebung der Bremsbelag-Segmente (21) bzw. (22) auf der Rotorscheibe (6)] vorhanden ist, und daß dadurch die Erwärmung der Rotorscheibe (6) gegenüber diesen Ausführungsformen noch weiter reduziert ist.

Ein weiterer Vorteil besteht in einem geringen Montageaufwand beim Belagwechsel, die Rotorscheibe (6) braucht nämlich nicht demontiert zu werden, weil die Bremsbelagplatten (25) von der Seite der abgenommenen Reibscheibe (8) eingeschoben werden können.

Die Bremsbelagplatten (25) stellen kostengünstige austauschbare Ersatzteile dar. Sie können separat gelagert werden und benötigen keine zusätzlichen Verbindungsmittel zur Rotorscheibe (6). Mit dieser Ausgestaltung der Bremsbelagplatten (25) werden die Herstellkosten für die Rotorscheibe (6) verringert.

Aufgrund der freien Zwischenräume (27) decken die Bremsplatten (25) nur einen Teil der Fläche des durch den inneren (52) und den äußeren (53) Durchmesser festgelegten Kreisring-Bereiches ab.

Wie in der nicht vorveröffentlichten deutschen Patentanmeldung P 199 36 394 gezeigt [dort Bremsbelag (2) nach Fig. 9 mit nierenförmiger Außenkontur, der in eine nierenförmige Durchgangsöffnung (3) einzuschieben ist], sind die Bremsbelagplatten (25) nierenförmig ausgebildet. Eine nierenförmige Ausbildung der Bremsbelagplatten (25) hat zum einen den Vorteil, daß durch die Asymmetrie der Nierenform auf einfache Weise eine Drehsicherung gegenüber der Rotorscheibe (6) hergestellt ist; zum anderen entspricht die Nierenform etwa der Drehbewegung der Rotorscheibe (6), wodurch sich der Vorteil eines verbesserten Verschleißverhaltens ergibt.

Es sei ergänzt, daß es bei allen genannten Ausführungsformen auch möglich ist, statt der zwei drehgesicherten und axial verschieblichen Reibscheiben (7) und (8) nur eine Reibscheibe (7) oder (8) vorzusehen, wobei dann die Kühlmittel im Bereich zwischen der Rotorscheibe (6) und dieser einen Reibscheibe (7) bzw. (8) angeordnet sind.

## Patentansprüche

1. Vollscheibenbremse mit folgenden Merkmalen:
a) Es ist eine als Rotorscheibe ausgebildete abzubremsende Scheibe vorgesehen, die drehfest mit einem Rad eines Fahrzeugs verbunden ist, welches auf einer Achse des Fahrzeugs drehbar gelagert ist;
b) es ist mindestens eine in Drehrichtung gesicherte und axial verschiebliche Reibscheibe vorgesehen;
c) es ist mindestens ein als separates mechanisches Teil ausgeführtes Bremsbelagbauteil vorgesehen;
d) die Bremsbelagbauteile sind drehfest innerhalb eines ringförmigen Bereiches auf der Rotorscheibe angeordnet;
e) es ist eine Zuspanneinrichtung vorgesehen, die entweder mit der Achse des Fahrzeugs verbunden ist, oder als schwimmender und umlaufender Sattel ausgeführt ist;
f) durch Betätigung der Zuspanneinrichtung ist eine reibschlüssige Verbindung von der Rotorscheibe mit der Reibscheibe hergestellt;
g) es sind Kühlmittel vorgesehen;
**gekennzeichnet durch** das folgende Merkmal:
h) die Kühlmittel sind im Bereich zwischen der Rotorscheibe und der mindestens einen Reibscheibe angeordnet.

2. Vollscheibenbremse nach Anspruch 1, **dadurch gekennzeichnet, daß** das mindestens eine Bremsbelagbauteil im Bereich zwischen der Rotorscheibe und der mindestens einen Reibscheibe angeordnet ist.

3. Vollscheibenbremse nach Anspruch 1 oder 2, **gekennzeichnet durch** die folgenden Merkmale:
a) Die Kühlmittel sind als Kanäle zur Luftführung realisiert;
b) in der Rotorscheibe sind nach außen freie Luftführungskanäle vorgesehen, welche **durch** freie Ausnehmungen in der Scheibe, die sich in Richtung zu der mindestens einen in Drehrichtung gesicherten Reibscheibe erstrecken, gebildet sind;
c) die mindestens eine in Drehrichtung gesicherte Reibscheibe stellt die der Rotorscheibe abgewandte Begrenzungsfläche der Luftführungskanäle dar.

4. Vollscheibenbremse nach Anspruch 3, **gekennzeichnet durch** die folgenden Merkmale:
a) Es sind zwei in Drehrichtung gesicherte und axial verschiebliche Reibscheiben vorgesehen;
b) in der Rotorscheibe sind zu beiden Seiten nach außen freie Luftführungskanäle vorgesehen, welche **durch** freie Ausnehmungen in der Scheibe, die sich in Richtung zu den beiden in Drehrichtung gesicherten Reibscheiben erstrecken, gebildet sind;
c) die beiden in Drehrichtung gesicherten Reibscheiben stellen jeweils die der Rotorscheibe abgewandten Begrenzungsflächen der Luftführungskanäle dar.

5. Vollscheibenbremse nach Anspruch 3 oder 4, **dadurch gekennzeichnet, daß** die Bremsbelagbauteile als fest mit der Rotorscheibe verbundene Bremsbelag-Segmente realisiert sind, welche innerhalb des ringförmigen Bereiches auf der Rotorscheibe einen ersten Flächenanteil abdecken.

6. Vollscheibenbremse nach Anspruch 5, **dadurch gekennzeichnet, daß** innerhalb des ringförmigen Bereiches auf der Rotorscheibe ein zweiter Flächenanteil für die Luftführungskanäle vorgesehen ist.

7. Vollscheibenbremse nach Anspruch 6, **dadurch gekennzeichnet, daß** die Summe aus dem ersten und dem zweiten Flächenanteil gleich der Fläche des ringförmigen Bereiches auf der Rotorscheibe ist.

8. Vollscheibenbremse nach einem der Ansprüche 3 bis 7, **dadurch gekennzeichnet, daß** die durch die Form der Ausnehmungen in der Rotorscheibe zumindest im Bereich der Scheibe bestimmten seitlichen Begrenzungsflächen der Luftführungskanäle als gerade Flächen ausgebildet sind.

9. Vollscheibenbremse nach einem der Ansprüche 3 bis 7, **dadurch gekennzeichnet, daß** die durch die Form der Ausnehmungen in der Rotorscheibe zumindest im Bereich der Scheibe bestimmten seitlichen Begrenzungsflächen der Luftführungskanäle als gekrümmte Flächen ausgebildet sind.

10. Vollscheibenbremse nach Anspruch 8 oder 9, **dadurch gekennzeichnet, daß** die durch die Form der Ausnehmungen in der Rotorscheibe im Bereich der Scheibe bestimmten seitlichen Begrenzungsflächen der Luftführungskanäle auch in den Bereich der Bremsbelagbauteile erstreckt sind.

11. Vollscheibenbremse nach einem der Ansprüche 4 bis 10, **dadurch gekennzeichnet, daß** die in der Rotorscheibe zu beiden Seiten vorgesehen Ausnehmungen der nach außen freien Luftführungskanäle an einer Seite zu in Bezug auf der anderen Seite versetzten Winkelpositionen angeordnet sind.

12. Vollscheibenbremse nach Anspruch 1, **dadurch gekennzeichnet, daß** die Bremsbelagbauteile axial verschieblich in der Rotorscheibe gelagert sind.

13. Vollscheibenbremse nach Anspruch 12, **gekennzeichnet durch** die folgenden Merkmale:
a) Die Bremsbelagbauteile sind als Bremsplatten ausgeführt;
b) die Kühlmittel sind als Luftzirkulationspfade realisiert, die **durch** freie Zwischenräume zwischen den Bremsbelagbauteilen gebildet sind;
c) die mindestens eine in Drehrichtung gesicherte Reibscheibe stellt die der Rotorscheibe abgewandte Begrenzungsfläche der Luftzirkulationspfade dar.

14. Vollscheibenbremse nach Anspruch 13, **gekennzeichnet durch** die folgenden Merkmale:
a) Es sind zwei in Drehrichtung gesicherte und axial verschiebliche Reibscheiben vorgesehen;
b) an der Rotorscheibe sind nach außen zu beiden Seiten Luftzirkulationspfade vorgesehen;
c) die beiden in Drehrichtung gesicherten Reibscheiben stellen jeweils die der Rotorscheibe abgewandten Begrenzungsflächen der Luftzirkulationspfade dar.

15. Vollscheibenbremse nach Anspruch 13 oder 14, **dadurch gekennzeichnet, daß** die Bremsplatten innerhalb des ringförmigen Bereiches auf der Rotorscheibe nur einen Teil der Fläche des ringförmigen Bereiches abdecken.

16. Vollscheibenbremse nach mindestens einem der vorstehenden Ansprüche, **dadurch gekennzeichnet, daß** für die mindestens eine in Drehrichtung gesicherte und axial verschiebliche Reibscheibe ein Keramik-Verbundwerkstoff gewählt ist.
